# EUROPEAN PATENT APPLICATION

(11) **EP 4 757 326 A1**
(43) Date of publication of application: **10.06.2026**
(21) Application number: 24849723.2
(22) Date of filing: 31.07.2024
(51) Int. Cl.: H04N 21/8405, H04N 21/25, G06F 16/435, G06F 16/953, G06F 16/73

(54) **MULTIMEDIA CONTENT CREATION METHOD, DEVICE, AND STORAGE MEDIUM**

(30) Priority: 01.08.2023 CN 202310961806
(71) Applicant: Lemon Inc., Grand Cayman, KY1-1205 (KY)
(72) Inventor: XUE, Weiwei, Beijing 100028 (CN); YAN, Ziyuan, Beijing 100028 (CN); YU, Yifeng, Beijing 100028 (CN); GUO, Feifei, Beijing 100028 (CN)
(74) Representative: Marks & Clerk LLP
(86) International application number: PCT/SG2024/050485
(87) International publication number: WO 2025/029193

(57) **Abstract**

Embodiments of the disclosure provide a method and a device for creating multimedia content, and a storage medium. The method includes: receiving a keyword query request transmitted from a creator client by a server; obtaining a recommended keyword according to the keyword query request, and transmitting the recommended keyword to the creator client; and receiving first multimedia content created and uploaded by the creator client according to the recommended keyword.

## Description

### CROSS-REFERENCE TO RELATED APPLICATION(S)

The disclosure is provided on the basis of Chinese Patent Application No. 202310961806.6, filed on August 1, 2023 and entitled "Method and Device for Creating Multimedia Content, and Storage Medium", and claims the priority to the Chinese Patent Application, which is incorporated in its entirety herein by reference.

### FIELD

Embodiments of the disclosure relate to the technical field of computer and network communication, and particularly relate to a method and a device for creating multimedia content, and a storage medium.

### BACKGROUND

Like a source of water, long-lasting and high-quality supply of multimedia content is vital for a platform of multimedia content such as videos. Ideally, high-quality and diverse multimedia content can constantly boost user experience and attract viewers to consume multimedia content at the platform of multimedia content. Accordingly, continuous consumption of the viewers will fuel continuous production of high-quality content by creators.

However, generally, the creators may have no idea about what to create for the platform of the multimedia content, and the viewers may also have no way to find desired multimedia content, which influences the experience of using the platform of multimedia content.

### SUMMARY

Embodiments of the disclosure provide a method and a device for creating multimedia content, and a storage medium.

In a first aspect, an embodiment of the disclosure provides a method for creating multimedia content. The method includes:
receiving a keyword query request transmitted from a creator client;
obtaining a recommended keyword according to the keyword query request, and transmitting the recommended keyword to the creator client; and
receiving first multimedia content created and uploaded by the creator client according to the recommended keyword.

In a second aspect, an embodiment of the disclosure provides a method for creating multimedia content. The method includes:
transmitting a keyword query request to a server;
receiving a recommended keyword returned from the server; and
obtaining first multimedia content created by a creator according to the recommended keyword, and transmitting the first multimedia content to the server.

In a third aspect, an embodiment of the disclosure provides a device for creating multimedia content. The device includes:
a reception unit configured to receive a keyword query request transmitted from a creator client;
a recommendation unit configured to obtain a recommended keyword according to the keyword query request; and
a transmission unit configured to transmit the recommended keyword to the creator client.

The reception unit is further configured to receive first multimedia content created and uploaded by the creator client according to the recommended keyword.

In a fourth aspect, an embodiment of the disclosure provides a device for creating multimedia content. The device includes:
a transmission unit configured to transmit a keyword query request to a server; and
a reception unit configured to receive a recommended keyword returned from the server.

The transmission unit is further configured to obtain first multimedia content created by a creator according to the recommended keyword, and transmit the first multimedia content to the server.

In a fifth aspect, an embodiment of the disclosure provides an electronic device. The electronic device includes: at least one processor and a memory;
the memory stores a computer-executable instruction.
the at least one processor executes the computer-executable instruction stored in the memory to cause the at least one processor to execute the method for creating multimedia content according to the first aspect above and various possible designs thereof, or the method for creating multimedia content according to the second aspect above and various possible designs thereof.

In a sixth aspect, an embodiment of the disclosure provides a computer-readable storage medium. The computer-readable storage medium stores a computer-executable instruction. A processor implements the method for creating multimedia content according to the first aspect above and various possible designs thereof, or the method for creating multimedia content according to the second aspect above and various possible designs thereof, when executing the computer-executable instruction.

In a seventh aspect, an embodiment of the disclosure provides a computer program product. The computer program product includes a computer-executable instruction. A processor implements the method for creating multimedia content according to the first aspect above and various possible designs thereof, or the method for creating multimedia content according to the second aspect above and various possible designs thereof, when executing the computer-executable instruction.

The embodiments of the disclosure provide the method and the device for creating multimedia content, and the storage medium. The method includes: receiving the keyword query request transmitted from the creator client by a server; obtaining the recommended keyword according to the keyword query request, and transmitting the recommended keyword to the creator client; and receiving the first multimedia content created and uploaded by the creator client according to the recommended keyword. According to the embodiments of the disclosure, the recommended keyword is provided for the creator client, such that a creator is stimulated to complete creation of the multimedia content according to the keyword, and a creative direction is provided for the creator. Meanwhile, the multimedia content of the server is supplemented and becomes more diverse, such that the demands of viewers can be better satisfied, and the activation of creators and the activation of the viewers can be improved.

### BRIEF DESCRIPTION OF THE DRAWINGS

In order to more clearly describe technical solutions in embodiments of the disclosure or in the prior art, the accompanying drawings required for the description of the embodiments or the prior art will be briefly introduced below. Obviously, the accompanying drawings in the following description are some embodiments of the disclosure. Those of ordinary skill in the art would also derive other accompanying drawings from these accompanying drawings without making inventive efforts.
Fig. 1 is an example diagram of a scene of a method for creating multimedia content according to an embodiment of the disclosure;
Fig. 2 is a schematic flow diagram of a method for creating multimedia content according to an embodiment of the disclosure;
Fig. 3 is a schematic diagram of an interface of a creator client according to an embodiment of the disclosure;
Fig. 4 is a schematic diagram of an interface of an administrator client according to an embodiment of the disclosure;
Fig. 5a is a schematic diagram of an interface providing a cold start strategy according to an embodiment of the disclosure;
Fig. 5b is a schematic diagram of an interface providing a cold start strategy according to another embodiment of the disclosure;
Fig. 6 is a schematic flow diagram of a method for creating multimedia content according to an embodiment of the disclosure;
Fig. 7 is a structural block diagram of a device for creating multimedia content according to another embodiment of the disclosure;
Fig. 8 is a structural block diagram of a device for creating multimedia content according to another embodiment of the disclosure; and
Fig. 9 is a schematic structural diagram of hardware of an electronic device according to an embodiment of the disclosure.

### DETAILED DESCRIPTION OF EMBODIMENTS

For making objectives, technical solutions and advantages of embodiments of the disclosure more obvious, the technical solutions in the embodiments of the disclosure will be clearly and completely described below in conjunction with the accompanying drawings in the embodiments of the disclosure. Obviously, the described embodiments are some embodiments rather than all the embodiments of the disclosure. Based on the embodiments of the disclosure, all other embodiments obtained by those of ordinary skill in the art without making creative efforts fall within the protection scope of the disclosure.

In the prior art, a viewer may find no desired multimedia content when searching for multimedia content on a platform of multimedia content. Even if related multimedia content is found, the depth and the breadth of the multimedia content may not satisfy the demand of a user. Meanwhile, a creator needs to rely on topic selection when creating multimedia content. The quality of topic selection is closely related to how much attention the creator may obtain on the platform, so it is the most concerned by the creator during creation of the multimedia content. The creator generally captures creative clues by means of spontaneous inspiration or a third-party tool, which provides inspiration for topic selection, but there is little clue support from the platform of multimedia content. In this case, the creator knows neither what content to create for the platform of multimedia content, nor what multimedia content may lead to the maximized influence. From the perspective of the platform of multimedia content, lack of specific multimedia content may also solidify the cognition of the users for the platform of multimedia content, resulting in the platform of multimedia content lacking room to further expand new business.

In order to solve the technical problems, the disclosure considers that the platform of multimedia content is capable of knowing current popular multimedia content and what multimedia content is lacking in a current network ecological environment most clearly, such that the platform of multimedia content may better guide the creator in the above aspects. A server of the platform of multimedia content may recommend a keyword to the creator in a more friendly and demand-matching manner by mining retrieved keywords, such that a win-win effect of the viewer, the platform and the creator is achieved. In this way, a current content consumption trend is provided for the creator, and a creative direction and inspiration are provided for the creator. Meanwhile, multimedia content of the server of the platform of multimedia content is supplemented, and key directional support is provided for platform operation. Finally, the viewer may find the desired multimedia content, and the demands of the viewer are better satisfied.

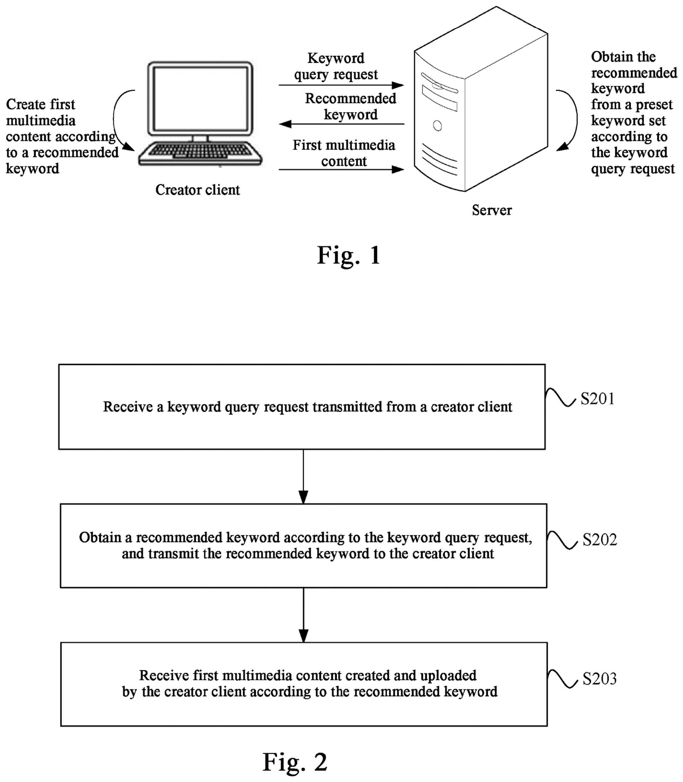

A schematic diagram of a scene of a method for creating multimedia content according to the disclosure is shown in Fig. 1, which includes a server of a platform of multimedia content and a creator client. The server receives a keyword query request transmitted from the creator client and obtains a recommended keyword according to the keyword query request, and transmits the recommended keyword to the creator client. The creator client creates first multimedia content and uploads the first multimedia content to the server according to the recommended keyword.

It should be noted that user information (including, but not limited to, user device information, user personal information, etc.) and data (including, but not limited to, data for analysis, data for storage, data for display, etc.) involved in the disclosure are all information and data permitted by a user or fully permitted by all parties. Collection, use, and processing of related data need to comply with related laws, regulations, and standards of related countries and regions, and a corresponding operation entry is provided for the user, such that the user may choose between permission or rejection.

The method for creating multimedia content according to the disclosure will be described in detail below in conjunction with specific embodiments.

Reference is made to Fig. 2, which is a schematic flow diagram of a method for creating multimedia content according to an embodiment of the disclosure, such that a creative direction is provided for a creator, and meanwhile, the multimedia content of a platform of multimedia content is supplemented. The method of the embodiment may be applied to a server. The method for creating multimedia content includes the following steps:
S201, receive a keyword query request transmitted from a creator client.

In the embodiment, a creator may transmit the keyword query request to the server by the creator client as needed.

Alternatively, the server may obtain a preset keyword set in advance. The preset keyword set is configured to provide inspiration for topic selection or creation for the creator. The creator client may query a keyword from the server, and then conduct creation on the basis of the queried keyword.

More specifically, the preset keyword set may be a popular keyword set, a keyword set short of multimedia content, or other types of keywords. Alternatively, the preset keyword set may include all the above types of keywords (keywords in each type constitute a subset). Further, the multimedia content may be divided into different topic categories, such as a movie category, a game category, and an animation category, such that the preset keyword set (subset) in the above cases may also be further subdivided according to different topic categories.

Therefore, the keyword query request of the creator client may be a query request for a target type of keyword under a global category (all topic categories) or a target topic category (one or more topic categories), and the target type of keyword includes at least one of the following: a popular keyword, a keyword short of multimedia content, and a keyword suitable for a creator. For instance, the keyword query request may be a query request for the popular keyword under the global category (all the topic categories), or a query request for the popular keyword under the game category, or a query request for the keyword short of multimedia content under the global category (all the topic categories), or a query request for the keyword short of multimedia content under the game category, a query request for the keyword suitable for a creator under the global category (all the topic categories), or a query request for the keyword suitable for a creator under the game category. Certainly, the keyword query request may also be a combination of two or more of the query requests described above, which will not be described in detail herein.

S202, obtain a recommended keyword according to the keyword query request, and transmit the recommended keyword to the creator client.

In the embodiment, after the server receives the keyword query request from the creator client, the server may obtain a recommended keyword according to the keyword query request. For instance, a keyword may be recommended by any possible recommendation algorithm, such as any algorithm recommending the popular keyword, any algorithm recommending the keyword short of multimedia content, and any algorithm recommending the keyword suitable for a creator.

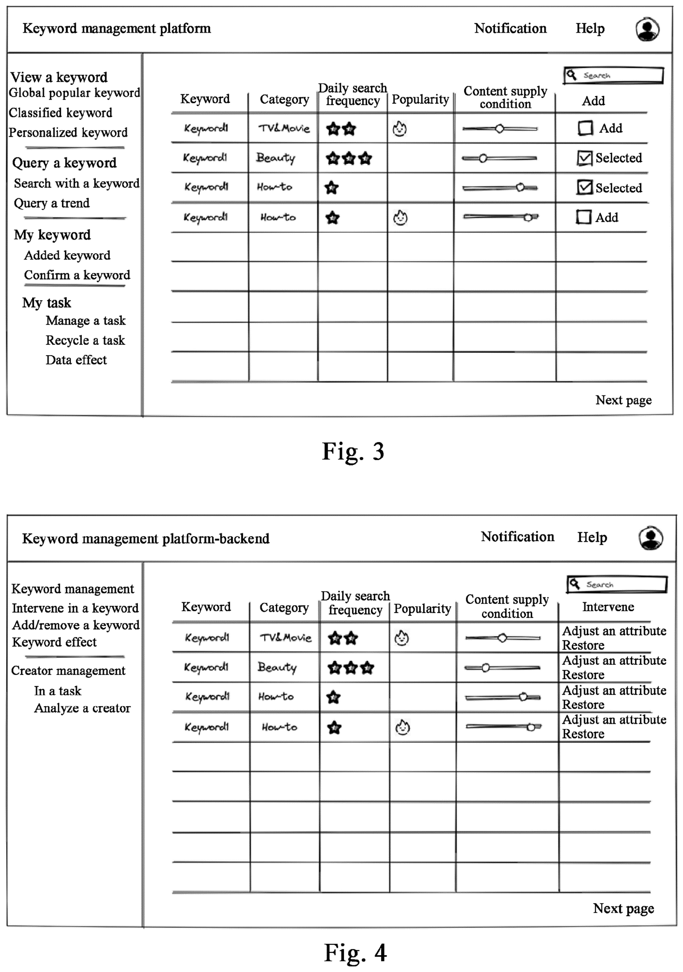

Alternatively, on the premise that the server obtains the preset keyword set in advance, candidate keywords satisfying the keyword query request may be obtained from the preset keyword set according to the keyword query request. Then, one or more keywords are selected from the candidate keywords as recommended keywords and are transmitted to the creator client for display on the creator client. A schematic diagram of an interface of the creator client is shown in Fig. 3. In addition, some attribute information of the recommended keywords, such as a topic category, popularity, and search frequency information, may also be displayed.

S203, receive first multimedia content created and uploaded by the creator client according to the recommended keyword.

In the embodiment, after the creator client receives and displays the recommended keyword, the creator may create the multimedia content according to the recommended keyword, thereby obtaining the first multimedia content associated with the recommended keyword. Then, the first multimedia content is uploaded to the server by the creator client. During an uploading process, a plurality of pieces of auxiliary information such as a title and a description tag of the first multimedia content may be filled with, and a binding relation is established between the first multimedia content and the recommended keyword after the uploading is completed.

Alternatively, if a plurality of recommended keywords exists, the creator may select from the plurality of recommended keywords at the creator client. As shown in Fig. 3, in response to a selection operation of the creator, the creator client may transmit a selection instruction for the recommended keyword to the server. The selection instruction includes the recommended keyword selected by the creator. The server may recommend keywords to the creator or other creators subsequently on the basis of the recommended keyword selected by the creator. For instance, the recommended keyword selected (or a similar keyword) is not recommended to the creator, and the recommended keyword not selected by the creator is recommended to other creator clients. In addition, the creator client may further query the recommended keyword selected and other functions, as shown in Fig. 3.

Further, the creator conducts creation according to the recommended keyword selected during creation, and the first multimedia content associated with the recommended keyword selected is obtained and uploaded to the server.

In addition, after the creator selects the recommended keyword, a target creation period in which creation is conducted according to the recommended keyword selected is set at the creator client and is transmitted to the server, and the creator may complete the creation of the multimedia content in the target creation period and upload the multimedia content to the server.

In the method for creating multimedia content according to the embodiment, the server receives the keyword query request transmitted from the creator client, obtains the recommended keyword according to the keyword query request, transmits the recommended keyword to the creator client, and receives the first multimedia content created and uploaded by the creator client according to the recommended keyword. According to the embodiment, the recommended keyword is provided for the creator client, such that the creator is stimulated to complete the creation of the multimedia content according to the keyword, and a creative direction is provided for the creator. Meanwhile, the multimedia content of the server is supplemented and becomes more diverse such that demands of viewers can be better satisfied, and activation of creators and activation of the viewers can be improved.

On the basis of any one of the embodiments described above, if the keyword query request is a query request for the popular keyword and/or the keyword short of multimedia content under the global category or a target topic category, obtaining a recommended keyword according to the keyword query request as described in S202 specifically includes:
obtaining, from a subset of popular keywords and/or a subset of keywords short of multimedia content in a preset keyword set, the recommended keyword under the global category or a target topic category according to the keyword query request.

In the embodiment, the preset keyword set may include a subset of popular keywords. When the creator client queries the popular keyword under the global category (all the topic categories) or the target topic category, the recommended keyword may be obtained from the subset of popular keywords and transmitted to the creator client for display. In addition, the preset keyword set may also include a subset of keywords short of multimedia content. When the creator client queries the keyword short of multimedia content under the global category (all the topic categories) or the target topic category, the recommended keyword may be obtained from the subset of keywords short of multimedia content. If the creator client simultaneously queries the popular keyword and the keyword short of multimedia content under the global category (all the topic categories) or the target topic category, the keywords may be obtained from the two subsets separately and transmitted to the creator client for display.

On the basis of any one of the embodiments described above, if the keyword query request is the query request for the keyword suitable for a creator under the global category (all the topic categories) or the target topic category, obtaining the recommended keyword according to the keyword query request includes:
matching creator attribute information corresponding to the creator client with attribute information of each keyword in the preset keyword set according to the keyword query request, filtering keywords matching each other, and determining the recommended keyword suitable for the creator client under the global category or target topic category according to the keywords matching each other.

In the embodiment, a keyword in the preset keyword set (which may include all the subsets) is pre-configured with attribute information, which includes, but is not limited to, a topic category, a field, a page clicking condition, viewing time, a play completion rate, retrieval frequency, satisfaction, etc. When the creator client queries the keyword suitable for a creator under the global category (all the topic categories) or the target topic category, creator attribute information corresponding to the creator client may be obtained. The creator attribute information includes, but is not limited to, a topic category that the creator is good at, a field that the creator is good at, a clicking condition of the multimedia content created historically by the creator, viewing time, a play completion rate, retrieval frequency, satisfaction, etc. The creator attribute information may be permitted by the creator client to be collected and used by the server. The server may match the attribute information of the keyword in the preset keyword set (which may include all the subsets) with the creator attribute information, filter the keyword matching the creator attribute information, and transmit the keyword to the creator client as the recommended keyword for display, such that personalized keyword recommendation for different creators is achieved.

Alternatively, when the creator client queries the popular keyword suitable for a creator under the global category (all the topic categories) or the target topic category, the server may match the creator attribute information with the attribute information of the keyword in the subset of popular keywords, and the keyword matching the creator attribute information is filtered as the recommended keyword. When the creator client queries the keyword short of multimedia content and suitable for the creator under the global category (all the topic categories) or the target topic category, the server may match the creator attribute information with the attribute information of the keyword in the subset of keywords short of multimedia content, and the keyword matching the creator attribute information is filtered as the recommended keyword.

On the basis of any one of the embodiments described above, obtaining recommended keyword according to the keyword query request at S202 may further include:
S2021, obtain historical creation period information and/or historical performance information corresponding to the creator client, where the historical performance information is historical information indicating that the creator client completed creation according to a recommended keyword.
S2022, determine, according to the historical creation period information and/or the historical performance information, a target number of recommended keywords and/or a target ratio of keywords with different popularity or shortage degrees in the recommended keywords.
S2023, obtain, according to the target number and/or the target ratio, the recommended keywords from a preset keyword set.

In the embodiment, when obtaining the recommended keyword, a plurality of candidate keywords satisfying the keyword query request of the creator client may exist, and the candidate keywords are different from each other in popularity or shortage degree. If each creator client is provided with the recommended keyword with the highest popularity or shortage degree, crowding of the multimedia content finally recycled may be inevitably caused. That is, the multimedia content recycled has the highest popularity or shortage degree, and no one creates and produces the multimedia content corresponding to the keyword with lower popularity or shortage degrees. Therefore, in the embodiment, when the recommended keyword is obtained, the creation ability of each creator client is considered, and the target number of the recommended keywords and/or the target ratio of the keywords having different popularity or shortage degrees are/is rationally allocated, such that the recommended keywords may be uniformly distributed to each creator client. The creation ability of a creator client is characterized by the historical creation period information (for instance, an average creation period) and/or the historical performance information corresponding to the creator client. The historical performance information is the historical information indicating that the creator client completed creation according to the recommended keyword (an actual completion condition of the multimedia content when the creator promises to create the multimedia content for a recommended keyword). Certainly, the creation ability of the creator client may also be characterized by other information. That is, other information may also be considered when the target number and/or the target ratio are/is determined, which will not be described in detail herein.

For the target number of the recommended keywords, if a historical creation period is relatively short, the creator corresponding to the creator client creates a video relatively fast, thus the target number of the recommended keywords may be greater; and if the historical performance information is desirable, the creator corresponding to the creator client may complete creation on time, thus the target number of the recommended keywords may also be greater. For the target ratio of the keywords with different popularity or shortage degrees in the recommended keywords, if the historical creation period is short and/or the historical performance information is desirable, the creator corresponding to the creator client has a strong creation ability, thus more popular keywords with higher popularity or keywords with higher shortage degrees may be recommended to the creator client. That is, a ratio of such keywords is increased, to ensure that the multimedia content corresponding to these keywords may be created stably and instantly, and uniformity of the multimedia content is achieved. After the target number of the recommended keywords and/or the target ratio of the keywords with different popularity or shortage degrees in the recommended keywords are/is determined, the recommended keywords may be obtained from the preset keyword set (which may include all the subsets).

On the basis of any one of the embodiments described above, before obtaining the recommended keyword according to the keyword query request, the preset keyword set may be obtained. The preset keyword set is configured to better guide the creator in creating the multimedia content. The platform of multimedia content generally provides a search function. The search function is to query the multimedia content by depending on keyword inputs from users, which reflects the real demands of viewers. Search frequency also directly reflects popularity. Meanwhile, if a time-sensitive event occurs, the search behaviors of users may show a signal of a sudden increase, and the time-sensitive event may be captured in the first place.

Therefore, in the embodiment, a keyword retrieval log may be obtained. The keyword retrieval log is configured to record log information of keywords to be retrieved that are received by the server and transmitted from a plurality of viewer clients during retrieval of the multimedia content and operation processes of returning the multimedia content associated with the keywords to be retrieved. The server may perform keyword analysis based on the keyword retrieval log to obtain the preset keyword set.

The preset keyword set may be the popular keyword set, or the preset keyword set includes a subset of popular keywords. Retrieval frequency information of each keyword in the keyword retrieval log may be obtained according to the keyword retrieval log, and further, the popular keywords are filtered according to the retrieval frequency information of each keyword. Consequently, the preset keyword set is constructed, or the subset of popular keywords of the preset keyword set is constructed.

In the embodiment, the retrieval frequency information may be a daily retrieval frequency or a cumulative retrieval frequency in a past period. The retrieval frequency information is analyzed, such that a popular keyword or a popular keyword that is suddenly increased and time-sensitive may be obtained.

Alternatively, the popularity and a historical trend of a popular keyword may be recorded, and a function of querying popularity and/or a historical trend of a popular keyword may be provided for the creator client.

In addition, the preset keyword set may be the set of keywords short of multimedia content, or the preset keyword set includes a subset of keywords short of multimedia content. A satisfaction index of each keyword in the keyword retrieval log may be obtained according to the keyword retrieval log. The satisfaction index is configured to characterize the satisfaction of a retrieval user for a retrieval result corresponding to a retrieved keyword and/or an association degree between a keyword retrieval result and the retrieved keyword. Further, the keywords short of multimedia content are filtered according to the satisfaction index of each keyword in the keyword retrieval log. The preset keyword set is constructed, or the subset of keywords short of multimedia content of the preset keyword set is constructed.

In the embodiment, the satisfaction index of any keyword may be obtained through statistical analysis of behavior data of a plurality of retrieval users for the retrieval result corresponding to the keyword in the keyword retrieval log. If the multimedia content in the retrieval result is not played by the retrieval users, or the retrieval users constantly skip the multimedia content in the retrieval result, or the retrieval users directly leave the retrieval result corresponding to the keyword, the plurality of retrieval users are dissatisfied with the retrieval result corresponding to the keyword, and satisfaction of the retrieval users for the retrieval result is low. In addition/alternatively, the association degree between the keyword retrieval result and the retrieved keyword may be further analyzed. For example, the association degree between the keyword and text content such as a title, a subtitle, and a tag of the multimedia content in the retrieval result is analyzed through a specific algorithm, or the association degree between a picture in the multimedia content and the keyword is analyzed, or the association degree between an audio in the multimedia content and the keyword is analyzed. For a plurality of pieces of multimedia content in the retrieval result, the association degrees corresponding to all pieces of multimedia content are merged, such that the association degree between the keyword retrieval result and the retrieved keyword may be obtained. If the association degree is low, satisfaction of the retrieval result is low. Through the satisfaction analysis, a keyword having low satisfaction may be filtered as the keyword short of multimedia content.

On the basis of any one of the embodiments described above, for each keyword in the preset keyword set, information obtained through keyword analysis may regarded as an attribute of the keyword and recorded, which includes, but is not limited to, retrieval frequency information, a topic category, a satisfaction index, etc., and may further include a page clicking condition, viewing time, a play completion rate, etc. When the recommended keyword is transmitted to the creator client, one or more pieces of the attribute information may be displayed to the creator client.

In a process of constructing the preset keyword set or each subset, operations such as keyword security check, deduplication, and normalization may be further involved, such that security and simplification of the preset keyword set or each subset are ensured. The normalization operation is to aggregate similar keywords into a keyword.

On the basis of any one of the embodiments described above, an administrator client may manage and maintain any keyword in the preset keyword set by controlling the activation and deactivation of any keyword, adjusting attribute information, restoring attribute information, etc. An interface of the administrator client may be as shown in Fig. 4. The administrator client may transmit a configuration instruction for any keyword in the preset keyword set to the server. The configuration instruction includes a deactivation instruction, an activation instruction, an attribute information adjustment instruction, or an attribute information restoration instruction. In turn, the server may perform corresponding configuration operations of deactivating, activating, adjusting the attribute information, and restoring the attribute information according to various configuration instructions.

On the basis of any one of the embodiments described above, if the server receives a creation period setting instruction transmitted from the creator client, and the creation period setting instruction includes a target creation period in which the creator client conducts creation according to the recommended keyword selected, the server may further monitor creation progress of the creator client and/or performance information of the creator client according to the period, and transmit the creation progress of the creator client and/or the performance information of the creator client to the administrator client for display. In this way, the administrator client may know the creation progress and condition of each keyword, and may further know a condition of each creator.

On the basis of any one of the embodiments described above, after receiving the first multimedia content created and uploaded by the creator client according to the recommended keyword, the server may start a check algorithm, which includes, but is not limited to, content security check and content relevance check of the first multimedia content, completeness check of provided additional fields, etc. The content security check is to check the security of text content such as a title, a subtitle and a tag, a picture, and an audio of the first multimedia content according to preset rules separately. The content relevance check is to determine an association degree between text content (such as a title, a subtitle and a tag, a picture and an audio of the multimedia content) and a keyword, and determine content relevance of the first multimedia content by merging determination results of various association degrees. The completeness check of provided additional fields is to check whether fields such as a title and a description tag of the first multimedia content are complete.

After the first multimedia content passes the checks, the first multimedia content may be added into a viewer client-oriented collection of multimedia content, so as to be searched for and viewed by the viewer client.

As a new video, the first multimedia content has no playing data and traffic in a cold start stage, and is retrieved and consumed by a viewer in a search scene. Cold start generally takes a relatively long time. In order to shorten the cold start time, to improve the exposure of the first multimedia content, and to enable the creator to get benefits as soon as possible, in an embodiment, the first multimedia content may be added into a proprietary multimedia content pool, and may be pushed to the viewer client according to a preset cold start strategy, such that it is ensured that the first multimedia content may be exposed to a certain extent in the cold start stage. In addition, some incentive projects may also be added into the part of distribution, which also has a better promotion effect on a driving force of the creator.

Alternatively, pushing the first multimedia content to the viewer client may specifically include:
receiving a multimedia content search request transmitted from the viewer client, where the multimedia content search request includes a keyword to be searched for; obtaining a search result corresponding to the keyword to be searched for according to the keyword to be searched for; and
if the keyword to be searched for is the same as a keyword associated with the first multimedia content in the proprietary multimedia content pool and the search result corresponding to the keyword to be searched for does not include the first multimedia content, then the first multimedia content is added into the search result corresponding to the keyword to be searched for and then the search result corresponding to the keyword to be searched for is transmitted to the viewer client.

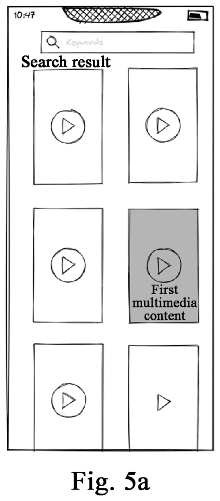

In the embodiment, when the viewer client searches for the multimedia content on the basis of the keyword to be searched for, the server may obtain the search result corresponding to the keyword to be searched for from the viewer client-oriented collection of multimedia content in a general manner. If the keyword to be searched for is the same as the keyword associated with the first multimedia content in the proprietary multimedia content pool and the first multimedia content does not appear within the search result corresponding to the keyword to be searched for (or the first page of search results or top N search results corresponding to the keyword to be searched for), then the first multimedia content is added into the search result (including added into the first page of search results or the top N search results), and then the search result is transmitted to the viewer client. In this way, the first multimedia content is displayed in the search result of the viewer client as shown in Fig. 5a, such that the first multimedia content may be more easily consumed by the viewer, thereby playing data and flow are accumulated.

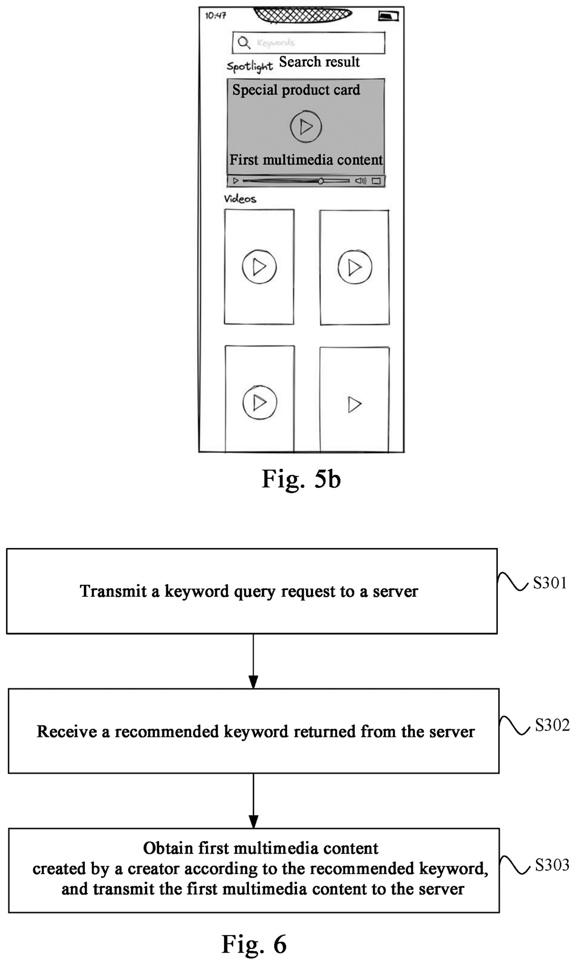

Alternatively, the first multimedia content may be added in a form of a special product into the search result corresponding to the keyword to be searched for, such that the first multimedia content may be displayed in the form of the special product at the viewer client. The special product may be a special card, etc. Because the special product generally has position advantages, for instance, is displayed in a specific position of the retrieval result, the first multimedia content may be exposed by means of the special product, as shown in Fig. 5b, which may be more easily consumed by the viewer, such that playing data and flow are accumulated faster. Alternatively, if the same keyword in the proprietary multimedia content pool corresponds to a plurality of pieces of first multimedia content, when the first multimedia content is added in the form of the special product into the search result corresponding to the keyword to be searched for, the plurality of pieces of first multimedia content may be added in the form of the special product into the search result in turn. In this way, it is ensured that each piece of first multimedia content has an opportunity to be added in the form of the special product into the search result and exposed.

Further, if the keyword to be searched for is the same as the keyword associated with the first multimedia content in the proprietary multimedia content pool and the search result corresponding to the keyword to be searched for includes the multimedia content, then the first multimedia content accumulates enough playing data and may be viewed and consumed by the viewer, and the cold start stage is ended. Consequently, the first multimedia content may be deleted from the proprietary multimedia content pool, and the preset cold start strategy is no longer used.

Reference is made to Fig. 6, which is a schematic flow diagram of a method for creating multimedia content according to an embodiment of the disclosure. The method of the embodiment may be applied to a creator client. The method for creating multimedia content includes the following steps:
S301, transmit a keyword query request to a server.
S302, receive a recommended keyword returned from the server.
S303, obtain first multimedia content created by a creator according to the recommended keyword, and transmit the first multimedia content to the server.

The embodiment is the method embodiment at the creator client side in the embodiment above. Reference may be made to the embodiments described above for the principle and the technical effect of the embodiment, which will not be repeated herein.

Alternatively, after receiving the recommended keyword returned from the server, the method further includes:
displaying the recommended keyword; and
transmitting a selection instruction for the recommended keyword to the server in response to a selection operation of the creator for the recommended keyword, where the selection instruction includes the recommended keyword selected by the creator.

Obtaining the first multimedia content created by the creator according to the recommended keyword includes:
obtaining the first multimedia content created by the creator according to the recommended keyword selected.

Alternatively, the method further includes:
receiving a target creation period input from the creator, where the target creation period is a creation period in which creation is conducted according to the recommended keyword selected; and
transmitting a creation period setting instruction to the server, where the creation period setting instruction includes the target creation period.

Alternatively, the keyword query request is a query request for a target type of keyword under a global category or a target topic category, and the target type of keyword includes at least one of the following: a popular keyword, a keyword short of multimedia content, and a keyword suitable for a creator.

The embodiment is the method embodiment at the creator client side in the embodiment above. Reference may be made to the embodiments described above for the principle and the technical effect of the embodiment, which will not be repeated herein.

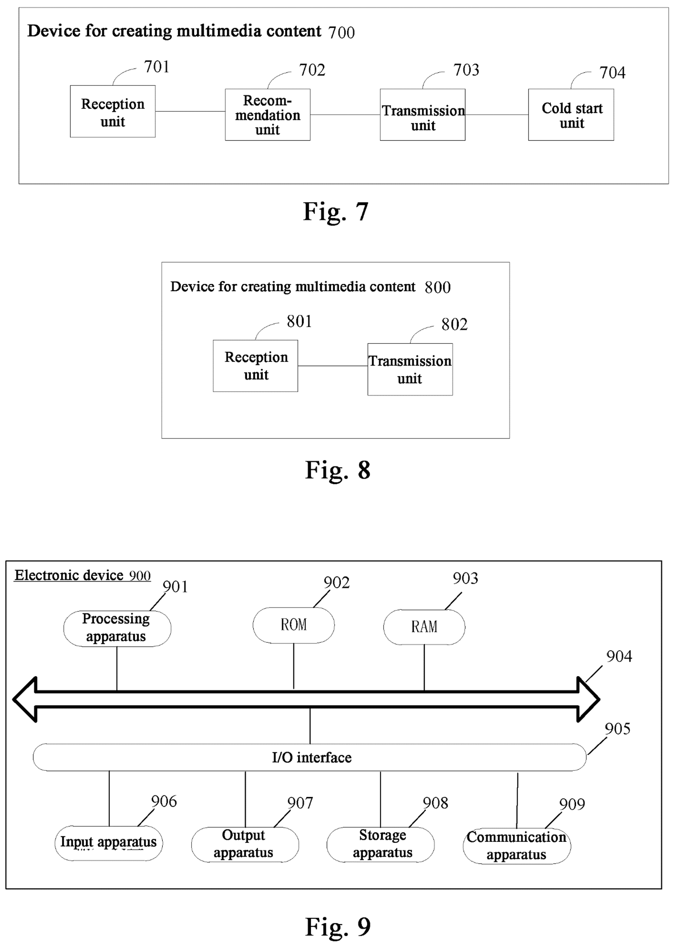

Fig. 7 is a structural block diagram of a device for creating multimedia content according to an embodiment of the disclosure, corresponding to the method for creating multimedia content at the server side according to the embodiments described above. For convenience of description, only part of content related to the embodiment of the disclosure is shown. With reference to Fig. 7, the device 700 for creating multimedia content includes: a reception unit 701, a recommendation unit 702, and a transmission unit 703.

The reception unit 701 is configured to receive a keyword query request transmitted from a creator client.

The recommendation unit 702 is configured to obtain a recommended keyword according to the keyword query request.

The transmission unit 703 is configured to transmit the recommended keyword to the creator client.

The reception unit 701 is further configured to receive first multimedia content created and uploaded by the creator client according to the recommended keyword.

In one or more embodiments of the disclosure, the reception unit 701 is further configured to receive a selection instruction transmitted from the creator client for the recommended keyword after transmitting the recommended keyword to the creator client.

When receiving the first multimedia content created and uploaded by the creator client according to the recommended keyword, the reception unit 701 is further configured to:
receive the first multimedia content created and uploaded by the creator client according to the recommended keyword selected.

In one or more embodiments of the disclosure, the keyword query request is a query request for a target type of keyword under a global category or a target topic category, and the target type of keyword includes at least one of the following: a popular keyword, a keyword short of multimedia content, and a keyword suitable for a creator.

In one or more embodiments of the disclosure, if the keyword query request is a query request for the popular keyword and/or the keyword short of multimedia content under the global category or a target topic category, when obtaining the recommended keyword according to the keyword query request, the recommendation unit 702 is configured to:
obtain the recommended keyword under the global category or the target topic category from a subset of popular keywords and/or a subset of keywords short of multimedia content in a preset keyword set according to the keyword query request.

In one or more embodiments of the disclosure, if the keyword query request is the query request for the keyword suitable for a creator under the global category or the target topic category, when obtaining the recommended keyword according to the keyword query request, the recommendation unit 702 is configured to:
match creator attribute information corresponding to the creator client with attribute information of each keyword in a preset keyword set according to the keyword query request, filter keywords matching each other, and determine the recommended keyword suitable for the creator client under the global category or the target topic category according to the keywords matching each other.

In one or more embodiments of the disclosure, when obtaining the recommended keyword according to the keyword query request, the recommendation unit 702 is configured to:
obtain historical creation period information and/or historical performance information corresponding to the creator client, where the historical performance information is historical information indicating that the creator client completed creation according to the recommended keyword;
determine a target number of recommended keywords and/or a target ratio of keywords with different popularity or shortage degrees in the recommended keywords according to the historical creation period information and/or the historical performance information; and
obtain the recommended keyword from a preset keyword set according to the target number and/or the target ratio.

In one or more embodiments of the disclosure, before obtaining the recommended keyword according to the keyword query request, the recommendation unit 702 is further configured to:
obtain a keyword retrieval log; and
perform keyword analysis based on the keyword retrieval log to obtain the preset keyword set.

In one or more embodiments of the disclosure, when performing keyword analysis based on the keyword retrieval log to obtain the preset keyword set, the recommendation unit 702 is configured to:
obtain retrieval frequency information of each keyword in the keyword retrieval log according to the keyword retrieval log; and
filter the popular keyword according to the retrieval frequency information of each keyword, to construct a subset of popular keywords of the preset keyword set.

In one or more embodiments of the disclosure, when performing keyword analysis based on the keyword retrieval log to obtain the preset keyword set, the recommendation unit 702 is configured to:
obtain a satisfaction index of each keyword in the keyword retrieval log according to the keyword retrieval log, where the satisfaction index is configured to characterize satisfaction of a retrieval user for a retrieval result corresponding to a retrieved keyword and/or an association degree between a keyword retrieval result and the retrieved keyword; and
filter the keyword short of multimedia content according to the satisfaction index of each keyword in the keyword retrieval log, and construct a subset of keywords short of multimedia content of the preset keyword set.

In one or more embodiments of the disclosure, the reception unit 701 is further configured to receive a configuration instruction transmitted from an administrator client for any keyword in the preset keyword set. The configuration instruction includes a deactivation instruction, an activation instruction, an attribute information adjustment instruction, or an attribute information restoration instruction.

The recommendation unit 702 is further configured to perform a corresponding configuration operation on the keyword according to the configuration instruction.

In one or more embodiments of the disclosure, after receiving the selection instruction transmitted from the creator client for the recommended keyword,

The reception unit 701 is further configured to receive a creation period setting instruction transmitted from the creator client. The creation period setting instruction includes a target creation period in which the creator client conducts creation according to the recommended keyword selected.

The recommendation unit 702 is further configured to obtain the creation progress of the creator client and/or performance information of the creator client according to the target creation period.

The transmission unit 703 is further configured to transmit the creation progress of the creator client and/or the performance information of the creator client to the administrator client for display.

In one or more embodiments of the disclosure, the device includes a cold start unit 704 configured to:
add the first multimedia content into a proprietary multimedia content pool; and
push the first multimedia content to a viewer client.

In one or more embodiments of the disclosure, when pushing the first multimedia content to the viewer client, the cold start unit 704 is configured to:
receive a multimedia content search request transmitted from the viewer client, where the multimedia content search request includes a keyword to be searched for;
obtain a search result corresponding to the keyword to be searched for according to the keyword to be searched for; and
if the keyword to be searched for is the same as a keyword associated with the first multimedia content in the proprietary multimedia content pool and the first multimedia content is not included in the search result corresponding to the keyword to be searched for, add the first multimedia content into the search result corresponding to the keyword to be searched for and then transmit the search result corresponding to the keyword to be searched for to the viewer client.

In one or more embodiments of the disclosure, when adding the first multimedia content into the search result corresponding to the keyword to be searched for, the cold start unit 704 is configured to:
add the first multimedia content in a form of a special product into the search result corresponding to the keyword to be searched for, to cause the first multimedia content to be displayed in the form of the special product at the viewer client.

In one or more embodiments of the disclosure, the cold start unit 704 is further configured to:
delete the first multimedia content from the proprietary multimedia content pool if the keyword to be searched for is the same as a keyword associated with the first multimedia content in the proprietary multimedia content pool and the first multimedia content is included in the search result corresponding to the keyword to be searched for.

The device for creating multimedia content according to the embodiment may be configured to execute the technical solution of the method embodiment at the server side, and has similar implementation principles and technical effects to the method embodiment, which will not be repeated in the embodiment.

Fig. 8 is a structural block diagram of a device for creating multimedia content according to an embodiment of the disclosure, corresponding to the method for creating multimedia content at the creator client side according to the embodiments described above. For convenience of description, only part of content related to the embodiment of the disclosure is shown. With reference to Fig. 8, the device 800 for creating multimedia content includes: a transmission unit 801 and a reception unit 802.

The transmission unit 801 is configured to transmit a keyword query request to a server.

The reception unit 802 is configured to receive a recommended keyword returned from the server.

The transmission unit 801 is further configured to obtain first multimedia content created by a creator according to the recommended keyword, and transmit the first multimedia content to the server.

In one or more embodiments of the disclosure, after receiving the recommended keyword returned from the server, the reception unit 802 displays the recommended keyword.

The transmission unit 801 is further configured to transmit a selection instruction for the recommended keyword to the server in response to a selection operation of the creator for the recommended keyword. The selection instruction includes the recommended keyword selected by the creator.

The transmission unit 801 is further configured to obtain the first multimedia content created by the creator according to the recommended keyword selected, and transmit the first multimedia content to the server.

In one or more embodiments of the disclosure, the reception unit 802 is further configured to receive a target creation period input from the creator. The target creation period is a creation period in which creation is conducted according to the recommended keyword selected.

The transmission unit 801 is further configured to transmit a creation period setting instruction to the server. The creation period setting instruction includes the target creation period.

In one or more embodiments of the disclosure, the keyword query request is a query request for a target type of keyword under a global category or a target topic category, and the target type of keyword includes at least one of the following: a popular keyword, a keyword short of multimedia content, and a keyword suitable for a creator.

The device for creating multimedia content according to the embodiment may be configured to execute the technical solution of the method embodiment at the creator client side, and has similar implementation principles and technical effects to the method embodiment, which will not be repeated in the embodiment.

Reference is made to Fig. 9, which shows a schematic structural diagram of an electronic device 900 suitable for implementing the embodiments of the disclosure. The electronic device 900 may be a creator terminal device or a server. The terminal device may be, but is not limited to, a mobile terminal such as a mobile phone, a notebook computer, a digital broadcast receiver, a personal digital assistant (PDA), a portable android device (PAD), a portable media player (PMP), or a vehicle-mounted terminal (for instance, a vehicle-mounted navigation terminal), and a fixed terminal such as a digital television (TV) or a desktop computer. The electronic device shown in Fig. 9 is only illustrative, and is not intended to limit functions and a use scope of the embodiments of the disclosure.

As shown in Fig. 9, the electronic device 900 may include a processing apparatus (for instance, a central processing unit or a graphics processing unit) 901, which may execute various appropriate actions and processing according to a program stored in a read-only memory (ROM) 902 or a program loaded from a storage apparatus 908 to a random access memory (RAM) 903. The RAM 903 further stores various programs and data required for operations of the electronic device 900. The processing apparatus 901, the ROM 902 and the RAM 903 are connected to one another by a bus 904. An input/output (I/O) interface 905 is further connected to the bus 904.

Generally, the following apparatuses may be connected to the I/O interface 905: an input apparatus 906 including, for instance, a touch screen, a touchpad, a keyboard, a mouse, a camera, a microphone, an accelerometer, a gyroscope, etc.; an output apparatus 907 including, for instance, a liquid crystal display (LCD), a speaker, a vibrator, etc.; the storage apparatus 908 including, for instance, a magnetic tape, a hard disk, etc.; and a communication apparatus 909. The communication apparatus 909 may allow the electronic device 900 to be in wireless or wired communication with other devices to exchange data. Although Fig. 9 shows the electronic device 900 including various apparatuses, it should be understood that not all the apparatuses shown are required to be implemented or included. More or fewer apparatuses may be alternatively implemented or included.

Particularly, according to the embodiment of the disclosure, the process described above with reference to the flow diagram may be implemented to be a computer software program. For instance, an embodiment of the disclosure includes a computer program product, which includes a computer program carried by a computer-readable medium. The computer program includes a program code configured to execute the method shown in the flow diagram. In such an embodiment, the computer program may be downloaded and configured from a network through the communication apparatus 909, or installed from the storage apparatus 908, or installed from the ROM 902. The computer program executes the functions defined in the method according to the embodiments of the disclosure when being executed by the processing apparatus 901.

It should be noted that the computer-readable medium described above in the disclosure may be a computer-readable signal medium, or a computer-readable storage medium, or any combination thereof. For instance, the computer-readable storage medium may be, but is not limited to, an electronic, magnetic, optical, electromagnetic, infrared, or semiconductor system, apparatus or device, or any suitable combination thereof. More specific instances of the computer-readable storage medium may include, but are not limited to, an electrical connection having on one or more wires, a portable computer disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination thereof. In the disclosure, the computer-readable storage medium may be any tangible medium including or storing a program. The program may be used by or in combination with an instruction execution system, apparatus, or device. In the disclosure, the computer-readable signal medium may include a data signal propagated in a baseband or as part of a carrier, and the data signal carries a computer-readable program code. The propagated data signal may be in various forms, which may be, but is not limited to, an electromagnetic signal, an optical signal, or any suitable combination thereof. The computer-readable signal medium may also be any computer-readable medium other than the computer-readable storage medium. The computer-readable signal medium may send, propagate, or transmit a program used by or in combination with an instruction execution system, apparatus, or device. The program code included in the computer-readable medium may be transmitted by any suitable medium, which may be, but is not limited to, an electric wire, an optical cable, radio frequency (RF), etc., or any suitable combination thereof.

The computer-readable medium described above may be included in the electronic device, or may exist independently without being assembled into the electronic device.

The computer-readable medium described above carries one or more programs. The one or more programs cause the electronic device to execute the method shown in the embodiments described above when being executed by the electronic device.

A computer program code configured to execute an operation of the disclosure may be written in one or more programming languages or a combination thereof. The programming languages include object-oriented programming languages such as Java, Smalltalk, and C++, and also include conventional procedural programming languages such as "C" or similar programming languages. The program code may be executed entirely on a user computer, executed partially on a user computer, executed as a stand-alone software package, executed partially on a user computer and partially on a remote computer, or executed entirely on the remote computer or a server. In the case involving the remote computer, the remote computer may be connected to the user computer through any type of network including a local area network (LAN) or a wide area network (WAN), or may be connected to an external computer (for instance, the remote computer is connected through the Internet by an Internet service provider).

The flow diagrams and block diagrams in the accompanying drawings illustrate system structures, functions, and operations, which may be achieved according to systems, methods, and computer program products in all the embodiments of the disclosure. In view of this, each block in the flow diagrams or block diagrams may represent a module, a program segment, or part of a code, which includes one or more executable instructions configured to implement specified logic functions. It should further be noted that in some alternative implementations, the functions noted in the blocks may also occur in an order different from that in the accompanying drawings. For instance, the functions represented by two continuous blocks may be actually implemented basically in parallel, or may be implemented in reverse orders, which depends on the involved functions. It should further be noted that each block in the block diagrams and/or flow diagrams and combinations of the blocks in the block diagrams and/or the flow diagrams may be implemented with dedicated hardware-based systems that implement the specified functions or operations, or may be implemented with combinations of dedicated hardware and computer instructions.

The units involved in the embodiments described in the disclosure may be implemented by software or hardware. Names of the units do not limit the units themselves in some cases. For example, a first obtaining unit may also be described to be "a unit obtaining at least two Internet protocol addresses".

The functions described herein may be at least partially executed by one or more hardware logic components. For instance, illustrative types of hardware logic components that may be used include, but are not limited to, a field programmable gate array (FPGA), an application-specific integrated circuit (ASIC), an application-specific standard product (ASSP), a system on chip (SOC), a complex programmable logic device (CPLD), etc.

In the context of the disclosure, the machine-readable medium may be a tangible medium, which may include or store a program used by or used in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific instances of the machine-readable storage medium may include an electrical connection based on one or more wires, a portable computer disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination thereof.

In a first aspect, there is provided a method for creating multimedia content according to one or more embodiments of the disclosure. The method comprises:
receiving a keyword query request transmitted from a creator client;
obtaining a recommended keyword according to the keyword query request, and transmitting the recommended keyword to the creator client; and
receiving first multimedia content created and uploaded by the creator client according to the recommended keyword.

According to one or more embodiments of the disclosure, after transmitting the recommended keyword to the creator client, the method further comprises:
receiving a selection instruction transmitted from the creator client for the recommended keyword.
receiving the first multimedia content created and uploaded by the creator client according to the recommended keyword comprises:
   receiving the first multimedia content created and uploaded by the creator client according to the recommended keyword selected.

According to one or more embodiments of the disclosure, the keyword query request is a query request for a target type of keyword under a global category or a target topic category, and the target type of keyword includes at least one of the following: a popular keyword, a keyword short of multimedia content, and a keyword suitable for a creator.

According to one or more embodiments of the disclosure, if the keyword query request is the query request for the popular keyword and/or the keyword short of multimedia content under the global category or the target topic category, obtaining the recommended keyword according to the keyword query request comprises:
obtaining the recommended keyword under the global category or the target topic category from a subset of popular keywords and/or a subset of keywords short of multimedia content in a preset keyword set according to the keyword query request.

According to one or more embodiments of the disclosure, if the keyword query request is the query request for the keyword suitable for a creator under the global category or the target topic category, obtaining the recommended keyword according to the keyword query request comprises:
matching creator attribute information corresponding to the creator client with attribute information of each keyword in a preset keyword set according to the keyword query request, filtering keywords matching each other, and determining the recommended keyword suitable for the creator client under the global category or the target topic category according to the keywords matching each other.

According to one or more embodiments of the disclosure, obtaining the recommended keyword according to the keyword query request comprises:
obtaining historical creation period information and/or historical performance information corresponding to the creator client, where the historical performance information is historical information indicating that the creator client completed creation according to the recommended keyword;
determining a target number of recommended keywords and/or a target ratio of keywords with different popularity or shortage degrees in the recommended keywords according to the historical creation period information and/or the historical performance information; and
obtaining the recommended keyword from a preset keyword set according to the target number and/or the target ratio.

According to one or more embodiments of the disclosure, before obtaining the recommended keyword according to the keyword query request, the method further comprises:
obtaining a keyword retrieval log; and
performing keyword analysis based on the keyword retrieval log to obtain the preset keyword set.

According to one or more embodiments of the disclosure, performing keyword analysis is based on the keyword retrieval log to obtain the preset keyword set comprises:
obtaining retrieval frequency information of each keyword in the keyword retrieval log according to the keyword retrieval log; and
filtering the popular keyword according to the retrieval frequency information of each keyword to construct a subset of popular keywords of the preset keyword set.

According to one or more embodiments of the disclosure, performing keyword analysis based on the keyword retrieval log to obtain the preset keyword set comprises:
obtaining a satisfaction index of each keyword in the keyword retrieval log according to the keyword retrieval log, where the satisfaction index is configured to characterize satisfaction of a retrieval user for a retrieval result corresponding to a retrieved keyword and/or an association degree between a keyword retrieval result and the retrieved keyword; and
filtering the keyword short of multimedia content according to the satisfaction index of each keyword in the keyword retrieval log to construct a subset of keywords short of multimedia content of the preset keyword set.

According to one or more embodiments of the disclosure, the method further comprises:
receiving a configuration instruction transmitted from an administrator client for any keyword in the preset keyword set, where the configuration instruction includes a deactivation instruction, an activation instruction, an attribute information adjustment instruction, or an attribute information restoration instruction; and
performing a corresponding configuration operation on the keyword according to the configuration instruction.

According to one or more embodiments of the disclosure, after receiving the selection instruction transmitted from the creator client for the recommended keyword, the method further comprises:
receiving a creation period setting instruction transmitted from the creator client, where the creation period setting instruction includes a target creation period in which the creator client conducts creation according to the recommended keyword selected;
obtaining creation progress of the creator client and/or performance information of the creator client according to the target creation period; and
transmitting the creation progress of the creator client and/or the performance information of the creator client to the administrator client for display.

According to one or more embodiments of the disclosure, after receiving the first multimedia content created and uploaded by the creator client according to the recommended keyword, the method further comprises:
adding the first multimedia content into a proprietary multimedia content pool; and
pushing the first multimedia content to a viewer client.

According to one or more embodiments of the disclosure, pushing the first multimedia content to the viewer client comprises:
receiving a multimedia content search request transmitted from the viewer client, where the multimedia content search request includes a keyword to be searched for;
obtaining a search result corresponding to the keyword to be searched for according to the keyword to be searched for; and
adding first multimedia content in the proprietary multimedia content pool into the search result corresponding to the keyword to be searched for and then transmitting the search result corresponding to the keyword to be searched for to the viewer client, if the keyword to be searched for is the same as a keyword associated with the first multimedia content and the first multimedia content is included in the search result corresponding to the keyword to be searched for.

According to one or more embodiments of the disclosure, adding the first multimedia content into the search result corresponding to the keyword to be searched for comprises:
adding the first multimedia content in a form of a special product into the search result corresponding to the keyword to be searched for, to cause the first multimedia content to be displayed in the form of the special product at the viewer client.

According to one or more embodiments of the disclosure, the method further comprises:
deleting first multimedia content from the proprietary multimedia content pool if the keyword to be searched for is the same as a keyword associated with the first multimedia content in the proprietary multimedia content pool and the first multimedia content is included in the search result corresponding to the keyword to be searched for.

In a second aspect, there is provided a method for creating multimedia content according to one or more embodiments of the disclosure. The method comprises:
transmitting a keyword query request to a server;
receiving a recommended keyword returned from the server; and
obtaining first multimedia content created by a creator according to the recommended keyword, and transmitting the first multimedia content to the server.

According to one or more embodiments of the disclosure, after receiving the recommended keyword returned from the server, the method further comprises:
displaying the recommended keyword; and
transmitting a selection instruction for the recommended keyword to the server in response to a selection operation of the creator for the recommended keyword, where the selection instruction includes the recommended keyword selected by the creator.

Obtaining the first multimedia content created by the creator according to the recommended keyword comprises:
obtaining the first multimedia content created by the creator according to the recommended keyword selected.

According to one or more embodiments of the disclosure, the method further comprises:
receiving a target creation period input from the creator, where the target creation period is a creation period in which creation is conducted according to the recommended keyword selected; and
transmitting a creation period setting instruction to the server, where the creation period setting instruction includes the target creation period.

According to one or more embodiments of the disclosure, the keyword query request is a query request for a target type of keyword under a global category or a target topic category, and the target type of keyword includes at least one of the following: a popular keyword, a keyword short of multimedia content, and a keyword suitable for a creator.

In a third aspect, there is provided a device for creating multimedia content according to one or more embodiments of the disclosure. The device includes:
a reception unit configured to receive a keyword query request transmitted from a creator client;
a recommendation unit configured to obtain a recommended keyword according to the keyword query request; and
a transmission unit configured to transmit the recommended keyword to the creator client.

The reception unit is further configured to receive first multimedia content created and uploaded by the creator client according to the recommended keyword.

According to one or more embodiments of the disclosure, the reception unit is further configured to receive a selection instruction transmitted from the creator client for the recommended keyword after transmitting the recommended keyword to the creator client.

When receiving the first multimedia content created and uploaded by the creator client according to the recommended keyword, the reception unit is further configured to:
receive the first multimedia content created and uploaded by the creator client according to the recommended keyword selected.

According to one or more embodiments of the disclosure, the keyword query request is a query request for a target type of keyword under a global category or a target topic category, and the target type of keyword includes at least one of the following: a popular keyword, a keyword short of multimedia content, and a keyword suitable for a creator.

According to one or more embodiments of the disclosure, if the keyword query request is the query request for the popular keyword and/or the keyword short of multimedia content under the global category or the target topic category, when obtaining the recommended keyword according to the keyword query request, the recommendation unit is configured to:
obtain the recommended keyword under the global category or the target topic category from a subset of popular keywords and/or a subset of keywords short of multimedia content in a preset keyword set according to the keyword query request.

According to one or more embodiments of the disclosure, if the keyword query request is the query request for the keyword suitable for a creator under the global category or the target topic category, when obtaining the recommended keyword according to the keyword query request, the recommendation unit is configured to:
match creator attribute information corresponding to the creator client with attribute information of each keyword in a preset keyword set according to the keyword query request, filter keywords matching each other, and determine the recommended keyword suitable for the creator client under the global category or the target topic category according to the keywords matching each other.

According to one or more embodiments of the disclosure, when obtaining the recommended keyword according to the keyword query request, the recommendation unit is configured to:
obtain historical creation period information and/or historical performance information corresponding to the creator client, where the historical performance information is historical information indicating that the creator client completed creation according to the recommended keyword;
determine a target number of recommended keywords and/or a target ratio of keywords with different popularity or shortage degrees in the recommended keywords according to the historical creation period information and/or the historical performance information; and
obtain the recommended keyword from a preset keyword set according to the target number and/or the target ratio.

According to one or more embodiments of the disclosure, before obtaining the recommended keyword according to the keyword query request, the recommendation unit is further configured to:
obtain a keyword retrieval log; and
perform keyword analysis based on the keyword retrieval log to obtain the preset keyword set.

According to one or more embodiments of the disclosure, when performing keyword analysis based on the keyword retrieval log to obtain the preset keyword set, the recommendation unit is configured to:
obtain retrieval frequency information of each keyword in the keyword retrieval log according to the keyword retrieval log; and
filter the popular keyword according to the retrieval frequency information of each keyword to construct a subset of popular keywords of the preset keyword set.

According to one or more embodiments of the disclosure, when performing keyword analysis based on the keyword retrieval log to obtain the preset keyword set, the recommendation unit is configured to:
obtain a satisfaction index of each keyword in the keyword retrieval log according to the keyword retrieval log, where the satisfaction index is configured to characterize satisfaction of a retrieval user for a retrieval result corresponding to a retrieved keyword and/or an association degree between a keyword retrieval result and the retrieved keyword; and
filter the keyword short of multimedia content according to the satisfaction index of each keyword in the keyword retrieval log to construct a subset of keywords short of multimedia content of the preset keyword set.

According to one or more embodiments of the disclosure, the reception unit is further configured to receive a configuration instruction transmitted from an administrator client for any keyword in the preset keyword set. The configuration instruction includes a deactivation instruction, an activation instruction, an attribute information adjustment instruction, or an attribute information restoration instruction;
the recommendation unit is further configured to perform a corresponding configuration operation on the keyword according to the configuration instruction.

According to one or more embodiments of the disclosure, after receiving the selection instruction transmitted from the creator client for the recommended keyword,
the reception unit is further configured to receive a creation period setting instruction transmitted from the creator client. The creation period setting instruction includes a target creation period in which the creator client conducts creation according to the recommended keyword selected.

The recommendation unit is further configured to obtain creation progress of the creator client and/or performance information of the creator client according to the target creation period.

The transmission unit is further configured to transmit the creation progress of the creator client and/or the performance information of the creator client to the administrator client for display.

According to one or more embodiments of the disclosure, the device includes a cold start unit configured to:
add the first multimedia content into a proprietary multimedia content pool; and
push the first multimedia content to a viewer client.

According to one or more embodiments of the disclosure, when pushing the first multimedia content to the viewer client, the cold start unit is configured to:
receive a multimedia content search request transmitted from the viewer client, where the multimedia content search request includes a keyword to be searched for;
obtain a search result corresponding to the keyword to be searched for according to the keyword to be searched for; and
if the keyword to be searched for is the same as a keyword associated with first multimedia content in the proprietary multimedia content pool and the first multimedia content is not included in the search result corresponding to the keyword to be searched for, add the first multimedia content into the search result corresponding to the keyword to be searched for and then transmit the search result corresponding to the keyword to be searched for to the viewer client.

According to one or more embodiments of the disclosure, when adding the first multimedia content into the search result corresponding to the keyword to be searched for, the cold start unit is configured to:
add the first multimedia content in a form of a special product into the search result corresponding to the keyword to be searched for, to cause the first multimedia content to be displayed in the form of the special product at the viewer client.

According to one or more embodiments of the disclosure, the cold start unit is further configured to:
if the keyword to be searched for is the same as a keyword associated with first multimedia content in the proprietary multimedia content pool and the first multimedia is not included in content the search result corresponding to the keyword to be searched for, delete the first multimedia content from the proprietary multimedia content pool.

In a fourth aspect, there is provided provide a device for creating multimedia content according to one or more embodiments of the disclosure. The device includes:
a transmission unit configured to transmit a keyword query request to a server; and
a reception unit configured to receive a recommended keyword returned from the server.

The transmission unit is further configured to obtain first multimedia content created by a creator according to the recommended keyword, and transmit the first multimedia content to the server.

According to one or more embodiments of the disclosure, after receiving the recommended keyword returned from the server, the reception unit displays the recommended keyword.

The transmission unit is further configured to transmit a selection instruction for the recommended keyword to the server in response to a selection operation of the creator for the recommended keyword. The selection instruction includes the recommended keyword selected by the creator.

The transmission unit is further configured to obtain the first multimedia content created by the creator according to the recommended keyword selected, and transmit the first multimedia content to the server.

According to one or more embodiments of the disclosure, the reception unit is further configured to receive a target creation period input from the creator. The target creation period is a creation period in which creation is conducted according to the recommended keyword selected.

The transmission unit is further configured to transmit a creation period setting instruction to the server. The creation period setting instruction includes the target creation period.

According to one or more embodiments of the disclosure, the keyword query request is a query request for a target type of keyword under a global category or a target topic category, and the target type of keyword includes at least one of the following: a popular keyword, a keyword short of multimedia content, and a keyword suitable for a creator.

In a fifth aspect, one or more embodiments of the disclosure provide an electronic device. The electronic device includes: at least one processor and a memory.

The memory stores a computer-executable instruction.

The at least one processor executes the computer-executable instruction stored in the memory to cause the at least one processor to execute the method for creating multimedia content according to the first aspect and various possible designs thereof, or the method for creating multimedia content according to the second aspect and various possible designs thereof.

In a sixth aspect, one or more embodiments of the disclosure provide a computer-readable storage medium. The computer-readable storage medium stores a computer-executable instruction. A processor implements the method for creating multimedia content according to the first aspect and various possible designs thereof, or the method for creating multimedia content according to the second aspect and various possible designs thereof, when executing the computer-executable instruction.

In a seventh aspect, one or more embodiments of the disclosure provide a computer program product. The computer program product includes a computer-executable instruction. A processor implements the method for creating multimedia content according to the first aspect and various possible designs thereof, or the method for creating multimedia content according to the second aspect and various possible designs thereof when executing the computer-executable instruction.

What are described above are merely illustrative of preferred embodiments of the disclosure and principles of the technology employed. Those skilled in the art should understand that the disclosure scope of the disclosure is not limited to the technical solution formed by a specific combination of the technical features described above, and should also cover other technical solutions formed by any combination of the technical features described above or their equivalent features without departing from the disclosed concept, for instance, the technical solution formed by replacing the features with the technical features having similar functions disclosed in (but not limited to) the disclosure or vice versa.

Further, although operations are depicted in a particular order, it should be understood that the operations are not required to be executed in the particular order shown or in a sequential order. In some cases, multitasking and parallel processing may be advantageous. Likewise, although several specific implementation details are included in the above discussion, the details should not be construed as limiting the scope of the disclosure. Some features described in the context of separate embodiments may also be implemented in combination in a single embodiment. On the contrary, various features described in the context of a single embodiment may also be implemented in a plurality of embodiments separately or in any suitable sub-combination manner.

Although the subject is described in languages of specific structural features and/or methodological logic actions, it should be understood that the subject defined in the appended claims is not necessarily limited to the specific features or actions described above. On the contrary, the specific features and actions described above are merely illustrative forms of implementing the claims.

## Claims

1. A method for creating multimedia content, comprising:
receiving a keyword query request transmitted from a creator client;
obtaining a recommended keyword according to the keyword query request, and transmitting the recommended keyword to the creator client; and
receiving first multimedia content created and uploaded by the creator client according to the recommended keyword.

2. The method according to claim 1, wherein after transmitting the recommended keyword to the creator client, the method further comprises:
receiving a selection instruction transmitted from the creator client for the recommended keyword; and
receiving first multimedia content created and uploaded by the creator client according to the recommended keyword comprises:
receiving the first multimedia content created and uploaded by the creator client according to a recommended keyword selected.

3. The method according to claim 1, wherein the keyword query request is a query request for a target type of keyword under a global category or a target topic category, and the target type of keyword comprises at least one of the following: a popular keyword, a keyword short of multimedia content, and a keyword suitable for a creator.

4. The method according to claim 3, wherein if the keyword query request is a query request for a popular keyword and/or a keyword short of multimedia content under the global category or the target topic category, obtaining a recommended keyword according to the keyword query request comprises:
obtaining the recommended keyword under the global category or the target topic category from a subset of popular keywords and/or a subset of keywords short of multimedia content in a preset keyword set according to the keyword query request.

5. The method according to claim 3, wherein if the keyword query request is a query request for a keyword suitable for a creator under the global category or the target topic category, obtaining a recommended keyword according to the keyword query request comprises:
matching creator attribute information corresponding to the creator client with attribute information of each keyword in a preset keyword set according to the keyword query request, filtering keywords matching each other, and determining the recommended keyword suitable for the creator client under the global category or the target topic category according to the keywords matching each other.

6. The method according to claim 3, wherein the obtaining a recommended keyword according to the keyword query request comprises:
obtaining historical creation period information and/or historical performance information corresponding to the creator client, wherein the historical performance information is historical information indicating that the creator client completed creation according to the recommended keyword;
determining a target number of recommended keywords and/or a target ratio of keywords with different popularity or shortage degrees in the recommended keywords according to the historical creation period information and/or the historical performance information; and
obtaining the recommended keyword from a preset keyword set according to the target number and/or the target ratio.

7. The method according to any one of claims 3-6, wherein before obtaining a recommended keyword according to the keyword query request, the method further comprises:
obtaining a keyword retrieval log; and
performing keyword analysis based on the keyword retrieval log to obtain the preset keyword set.

8. The method according to claim 6, wherein performing keyword analysis based on the keyword retrieval log to obtain the preset keyword set comprise:
obtaining retrieval frequency information of each keyword in the keyword retrieval log according to the keyword retrieval log; and
filtering a popular keyword according to the retrieval frequency information of each keyword to construct a subset of popular keywords of the preset keyword set.

9. The method according to claim 7, wherein performing keyword analysis based on the keyword retrieval log to obtain the preset keyword set comprise:
obtaining a satisfaction index of each keyword in the keyword retrieval log according to the keyword retrieval log, wherein the satisfaction index is configured to characterize satisfaction of a retrieval user for a retrieval result corresponding to a retrieved keyword and/or an association degree between a keyword retrieval result and the retrieved keyword; and
filtering a keyword short of multimedia content according to the satisfaction index of each keyword in the keyword retrieval log to construct a subset of keywords short of multimedia content of the preset keyword set.

10. The method according to claim 7, further comprising:
receiving a configuration instruction transmitted from an administrator client for any keyword in the preset keyword set, wherein the configuration instruction comprises a deactivation instruction, an activation instruction, an attribute information adjustment instruction, or an attribute information restoration instruction; and
performing a corresponding configuration operation on the keyword according to the configuration instruction.

11. The method according to claim 10, wherein after receiving a selection instruction transmitted from the creator client for the recommended keyword, the method further comprises:
receiving a creation period setting instruction transmitted from the creator client, wherein the creation period setting instruction comprises a target creation period in which the creator client conducts creation according to the recommended keyword selected;
obtaining creation progress of the creator client and/or performance information of the creator client according to the target creation period; and
transmitting the creation progress of the creator client and/or the performance information of the creator client to the administrator client for display.

12. The method according to any one of claims 1-6, wherein after receiving first multimedia content created and uploaded by the creator client according to the recommended keyword, the method further comprises:
adding the first multimedia content into a proprietary multimedia content pool; and
pushing the first multimedia content to a viewer client.

13. The method according to claim 12, wherein pushing the first multimedia content to a viewer client comprises:
receiving a multimedia content search request transmitted from the viewer client, wherein the multimedia content search request comprises a keyword to be searched for;
obtaining a search result corresponding to the keyword to be searched for according to the keyword to be searched for; and
adding first multimedia content in the proprietary multimedia content pool into the search result corresponding to the keyword to be searched for and then transmitting the search result corresponding to the keyword to be searched for to the viewer client if the keyword to be searched for is the same as a keyword associated with the first multimedia content in the proprietary multimedia content pool and the first multimedia content is not included the search result corresponding to the keyword to be searched for.

14. The method according to claim 13, wherein adding the first multimedia content into the search result corresponding to the keyword to be searched for comprises:
adding the first multimedia content in a form of a special product into the search result corresponding to the keyword to be searched for, to cause the first multimedia content to be displayed in the form of the special product at the viewer client.

15. The method according to claim 13, further comprising:
deleting the first multimedia content from the proprietary multimedia content pool if the keyword to be searched for is the same as a keyword associated with the first multimedia content in the proprietary multimedia content pool and the first multimedia content is included in the search result corresponding to the keyword to be searched for.

16. A method for creating multimedia content, comprising:
transmitting a keyword query request to a server;
receiving a recommended keyword returned from the server; and
obtaining first multimedia content created by a creator according to the recommended keyword, and transmitting the first multimedia content to the server.

17. The method according to claim 16, wherein after the receiving a recommended keyword returned from the server, the method further comprises:
displaying the recommended keyword; and
transmitting a selection instruction for the recommended keyword to the server in response to a selection operation of the creator for the recommended keyword, wherein the selection instruction comprises the recommended keyword selected by the creator; and
obtaining first multimedia content created by a creator according to the recommended keyword comprises:
obtaining the first multimedia content created by the creator according to the recommended keyword selected.

18. The method according to claim 17, further comprising:
receiving a target creation period input from the creator, wherein the target creation period is a creation period in which creation is conducted according to the recommended keyword selected; and
transmitting a creation period setting instruction to the server, wherein the creation period setting instruction comprises the target creation period.

19. The method according to any one of claims 16-18, wherein the keyword query request is a query request for a target type of keyword under a global category or a target topic category, and the target type of keyword comprises at least one of the following: a popular keyword, a keyword short of multimedia content, and a keyword suitable for a creator.

20. A device for creating multimedia content, comprising:
a reception unit configured to receive a keyword inquiry request transmitted from a creator client;
a recommendation unit configured to obtain a recommended keyword according to the keyword inquiry request; and
a transmission unit configured to transmit the recommended keyword to the creator client, wherein
the reception unit is further configured to receive first multimedia content created and uploaded by the creator client according to the recommended keyword.

21. A device for creating multimedia content, comprising:
a transmission unit configured to transmit a keyword inquiry request to a server; and
a reception unit configured to receive a recommended keyword returned from the server, wherein
the transmission unit is further configured to obtain first multimedia content created by a creator according to the recommended keyword, and transmit the first multimedia content to the server.

22. An electronic device, comprising: at least one processor and a memory, wherein
the memory stores a computer-executable instruction; and
the at least one processor executes the computer-executable instruction stored in the memory to cause the at least one processor to execute a method for creating multimedia content according to any one of claims 1-19.

23. A computer-readable storage medium, storing a computer-executable instruction, wherein a processor implements the method for creating multimedia content according to any one of claims 1-19 when executing the computer-executable instruction.

24. A computer program product, comprising a computer-executable instruction, wherein a processor implements the method according to any one of claims 1-19 when executing the computer-executable instruction.
